# EUROPEAN PATENT SPECIFICATION

(11) **EP 3 735 863 B1**
(45) Date of publication and mention of the grant of the patent: **10.07.2024**
(21) Application number: 20171465.6
(22) Date of filing: 27.04.2020
(51) Int. Cl.: A47B 91/02, F16B 12/20, F16B 12/46

(54) **JOINING AND LEVELLING MODULE FOR PARTS OF FURNITURE**
VERBESSERTES VERBINDUNGS- UND NIVELLIERUNGSSYSTEM FÜR MÖBELTEILE
SYSTEME AMELIORE DE CONNECTION ET DE MISE A NIVEAU POUR ELEMENTS DE MEUBLE

(30) Priority: 07.05.2019 IT 201900006585
(43) Date of publication of application: 11.11.2020
(73) Proprietor: LEONARDO S.r.l., 22060 Figino Serenza (CO) (IT)
(72) Inventor: CATTANEO, Carlo, 22060 Figino Serenza (CO) (IT)
(74) Representative: Dragotti & Associati S.R.L.

(56) References cited:
- WO-A1-2017/060255
- WO-A1-2019/049003
- AU-A1- 2009 227 484
- DE-U- 7 435 483
- IT-A1- UA20 161 574

## Description

The present invention relates to furniture and furnishing items comprising a joining and levelling module for parts of furniture and furnishing items .

As is well-known to persons skilled in the art, the current joining and levelling systems for furniture mainly aim at solving the following two technical problems.

A first problem is to eliminate the presence (in the horizontal and vertical panels) inside the furniture, of unsightly and anti-functional access holes to the two pairs of front and rear joining and levelling units, through which (i.e. the access holes), actuation/maneuvering tools such as screwdrivers and the like must pass.

Vertical panels refer to panels perpendicular to a floor or supporting surface of the furniture, whereas horizontal panels refer to panels parallel to said floor (such as a base) and perpendicular to said vertical panels.

A second problem is to be able to actuate both pairs of joining and levelling units, front and rear, with front access and in a very small space existing between the base of a piece of furniture (last lower horizontal panel) and the floor on which the furniture rests.

Systems of this type are described for example in patents PCT/EP2017/066275, PCT/EP2017/066496, PCT/EP2017/075675. further furnishing item is known from IT UA20 161 574 A1.

A further current requirement of the above-mentioned systems - there always being a total lack of holes inside the furniture - is to be able to actuate the front and rear joining units, and the front and rear levelling units even when the space between the horizontal base panel of the furniture (bottom panel) and the floor is practically non-existent, i.e. reduced to only a few millimeters. There is furniture which, before levelling, can rest directly with the base on the floor.

The general objective of the present invention is therefore to satisfy the above-mentioned further current requirement and, in view of this objective, a joining and levelling module for parts of furniture and furnishing items in general has been conceived, having the characteristics specified in the enclosed claim 1 and subordinate claims.

The structural and functional characteristics of the present invention and its advantages with respect to the known art can be clearly understood from the following description, referring to the attached schematic drawings, which illustrate two non-limiting embodiment examples of the invention itself. In the drawings:
- figures 1, 2 and 3 are exploded perspective views illustrating an example of a joining and levelling module according to a possible first embodiment of the invention;
- figure 4 is a plan view from above of the module of figures 1-3;
- figure 5 is a raised front view according to the arrow F of figure 4;

- figure 6 is a sectional view taken according to the line VI-VI of figure 4;
- figure 7 is a sectional view taken according to the line VII-VII of figure 4;
- figure 8 is an exploded perspective view illustrating an example of a joining and levelling module not according to the invention;
- figure 9 is a plan view from above of the module of figure 8;
- figure 10 is a raised front view according to the arrow F of figure 9;
- figure 11 is a sectional view taken according to the line XI-XI of figure 9; and
- figure 12 is a sectional view taken according to the line XII-XII of figure 9.

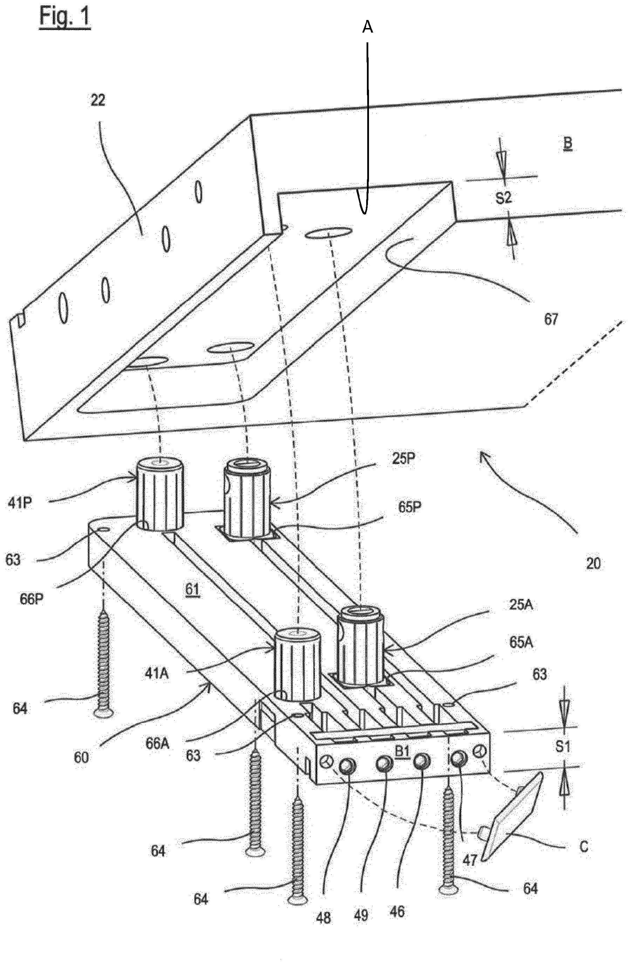

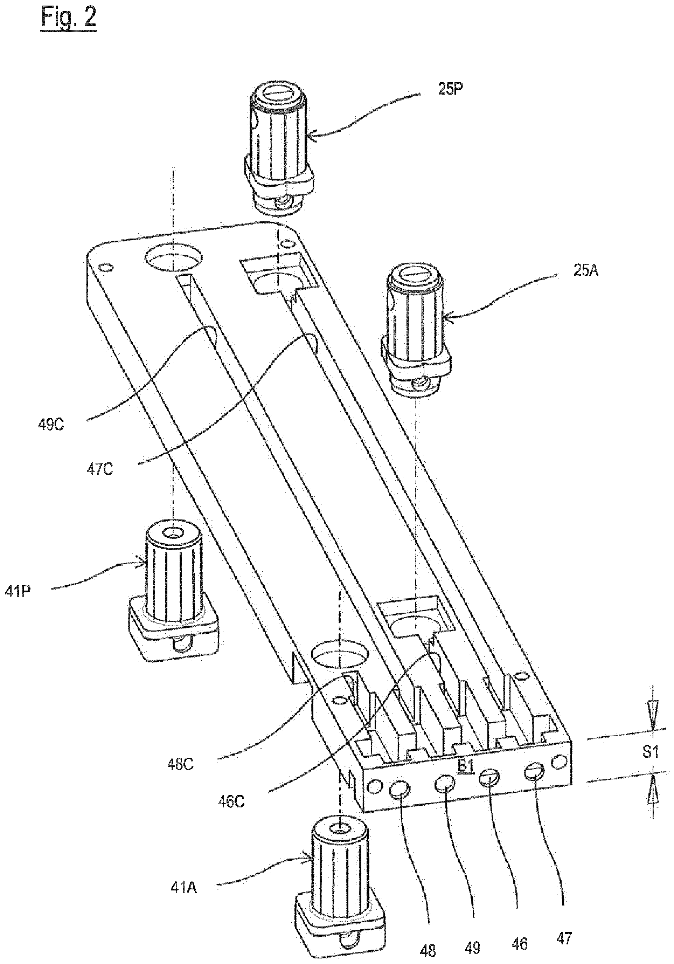

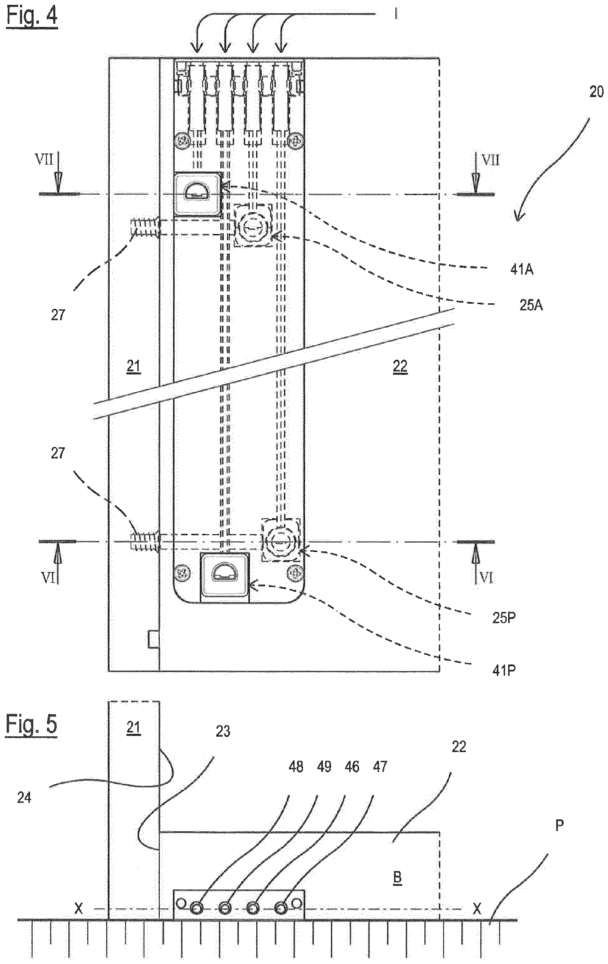

With reference to figures 1-7 of the drawings, 20 indicates as a whole an assembly of furniture or parts of furniture in general structurally composed of a vertical panel 21 (for example a shoulder of a piece of furniture) and a horizontal panel 22, or base, which is the lower horizontal panel of the furniture itself adjacent and parallel to a floor P, or other supporting surface on which said furniture rests.

The invention is illustrated and described, for the sake of simplicity, with respect to an essential furniture assembly, consisting of a single vertical panel and a single horizontal panel, as in most cases, however, the furniture assembly, or piece of furniture, is naturally composed of various vertical panels interconnected by horizontal panels.

As can be clearly seen from the drawings, the panels 21, 22 are perpendicular to each other and are stably joined together with the longitudinal edge 23 of the horizontal panel or base 22 which is abutted against the internal surface 24 of the vertical panel 21, which is perpendicular to the floor P.

The stable joining or connection between said panels 21, 22 is obtained by means of a pair of joining units 25A and 25P, front and rear, respectively: i.e. the front unit 25A is close to the front part of the furniture (visible edge B), whereas the rear unit 25P is close to the rear part of the furniture itself.

Each of the joining units 25A and 25P can, for example, be of the type described and illustrated in patent PCT/EP2017/ 066275, to which reference should be made for further clarifications, if necessary.

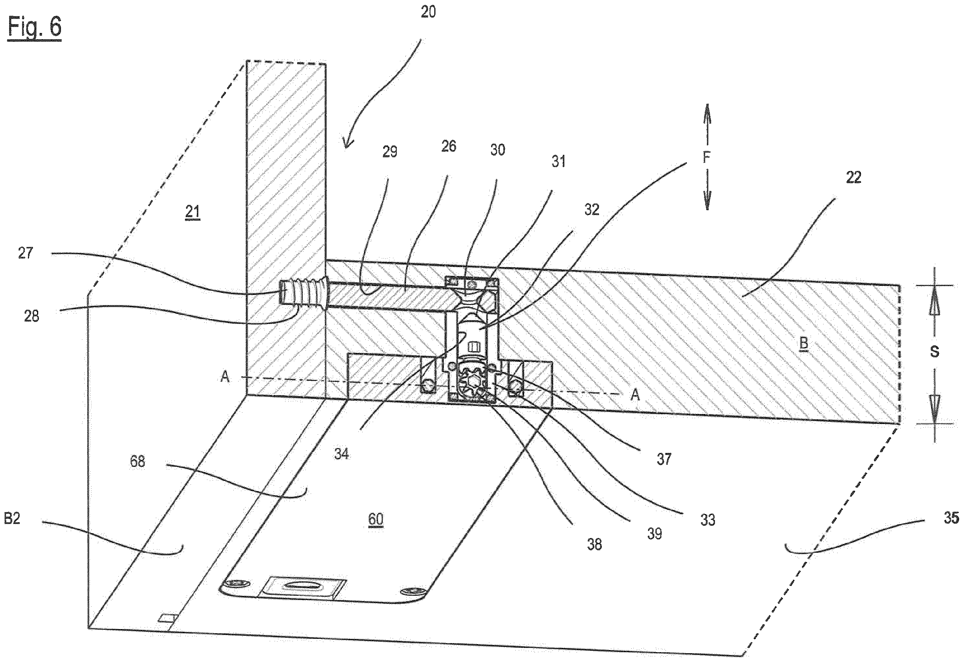

With reference to figure 6 of the drawings, briefly, each joining unit 25A and 25P is composed of a plug or pin 26 which extends from the vertical panel 21, perpendicular to the same. The plug 26 is fixed to the panel 21 by means of a shank 27 which is screwed or forced into a complementary seat 28 of the panel 21 itself.

Said plug 26 is inserted inside a corresponding seat 29 of the horizontal panel or base 22 and, at the end opposite to the shank 27, has an annular groove 30. As can be clearly seen from figure 6 of the drawings, said groove 30 has a truncated-conical, or flared, section in whose interior the tip 31, having a corresponding truncated-conical section, of an actuation screw 32 acts, which can be moved backwards and forwards in the direction of the arrow F. In this way, the panels 21, 22 are reciprocally moved together and firmly interconnected.

The screw 32 is perpendicular to the plug 26. Said screw 32 is driven to translate inside a body 33 which is inserted in a corresponding seat 34 of the base 22.

The translation of the screw 32 is controlled by a known screw-and-nut mechanism comprising a head with a toothed crown 37 provided at the end opposite to the tip 31, a pinion 38 with a perpendicular rotation axis (at 90°) with respect to the translation axis of the screw 32, being engaged with said head 37. The screw 32 can translate, whereas the head 37 and the pinion 38 can only rotate reciprocally engaged.

Said pinion 38 also has an indentation 39 in which maneuvering rods AC, AL, short and long respectively, are engaged, which control its rotation, as described in greater detail hereunder-, with access from the front side of the furniture (visible edge B).

According to the present invention, as can be clearly seen from the drawings, the overall height of said joining units 25A and 25P is contained within the thickness S of the panel or base 22.

Furthermore, the indentations 39 of the pinions 38 of the joining units 25A and 25P lie on the same horizontal plane A-A coinciding with the horizontal plane on which the base 22 lies.

The furniture assembly 20 is also provided with a pair of levelling units 41A and 41P, front and rear respectively, positioned close, adjacent, to the joining units 25A and 25P described above.

Each of said levelling units 41A and 41P can, for example, be of the type described and illustrated in patent PCT/EP2017/075675, to which reference should be made for further clarifications if necessary.

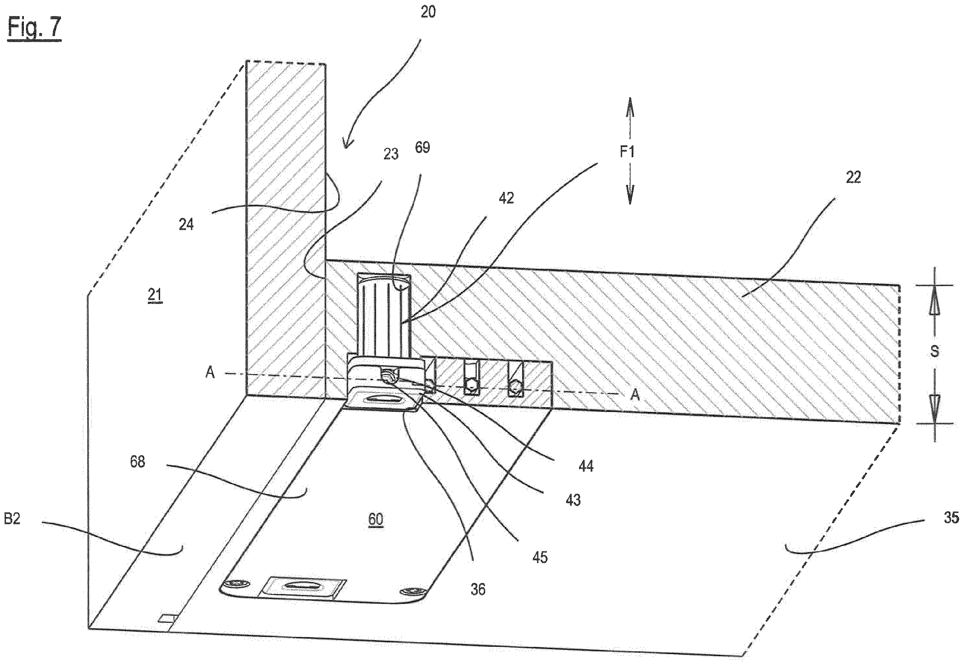

As can be clearly seen from figure 7 of the drawings, said levelling units 41A, 41P each consist of a telescopic column 42 with a supporting base 43 with a front opening 44, for access to an indentation 45 of a maneuvering/actuation pinion of a screw/nut mechanism (known *per* se and not shown), which controls the vertical translation in the direction of the arrow F1 of the telescopic column 42, and therefore of the leveller. Said telescopic column 42 is completely housed within a 71 of the lower horizontal panel, or base, 22, whereas the base 43 is housed inside the seat 36.

In this way, each levelling unit 41A/41P (i.e. its overall height) is completely contained in the thickness S of the base 22, when at rest, i.e. in a non-operating condition.

As can be clearly seen from the drawings, the indentations 39 of the joining units 25A, 25P are aligned with each other, as also the indentations 45 of the levelling units 41A, 41P.

All of the indentations 39 and 45 lie on the same plane A-A parallel to the lower external surface 35 of the base 22.

According to the invention, the joining units 25A, 25P and levelling units 41A, 41P described above are at least partially contained/assembled, within a joining and levelling module 60 comprising two pairs of joining units 25A, 25P and levelling units 41A, 41, front and rear respectively.

Said module 60 typically consists of a box-shaped support-container 61 on which the above-mentioned units 25A, 41A and 25P and 41P are assembled.

As can be clearly seen from the drawings, said support-container 61 has a substantially elongated flattened parallelepiped configuration, similar to a "power strip". Holes 63 are also provided for the passage of fixing screws 64.

The module 60, as configured above, also has, at the opposite ends, front and rear, seats 65A, 65P and, 66A, 66P, which house the joining units 25A, 25P and levelling units 41A and 41P, respectively (figures 1, 2, 6 and 7).

As can be clearly seen from figures, the module 60 having the structure described above, is housed or seated, and is fixed therein, by means of screws 64, or also by pressure, inside a complementary seat or recess 67 obtained within the thickness S of the base 22.

As can be clearly seen from the drawings, the module 60 has dimensions in width, length/depth and height/thickness equal to those of the seat or recess 67. In particular, the thickness S1 of the module 60 is equal to the height S2 of its seat 67.

Consequently, when the module 60 is housed within the seat 67, its lower surface 68 is coplanar with the lower surface 35 of the base 22.

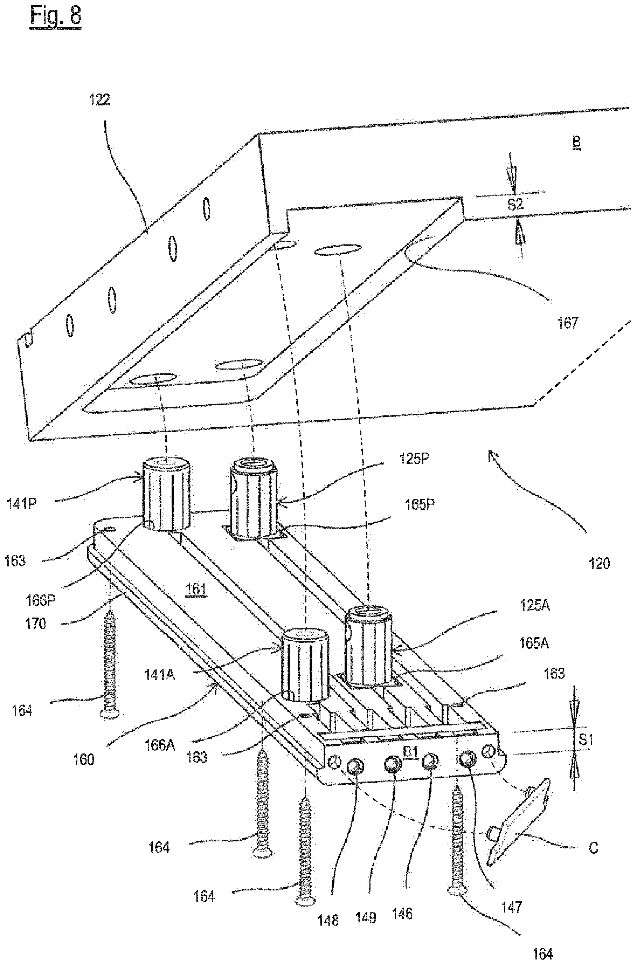

Said recess 67 is open in the front as can be seen in Figure 8 with an opening A on the visible edge B of the base 22, whereby said opening A is coplanar with the visible edge B of the lower panel or base 22 of the furniture assembly 20.

It should be noted, in fact, that the module 60 is positioned with its front end or side B1 coplanar with the visible edge B of the base 22, whereby access, by means of the tool 40, to the indentations 39, 45, of the respective joining units 25A, 25P and levelling units 41A, 41P, front and rear respectively, is achieved by means of respective pass-through holes 46, 47 and 48, 49. The holes 46, 47 allow access to the joining units 25A, 25P, whereas the holes 48, 49 to the levelling units 41A, 41P.

The pass-through holes 46, 47 and 48, 49 lie on the same plane x-x, which is parallel to the lower external surface 35 of the base 22 and perpendicular to the vertical panel 21.

Said longitudinal holes 46, 47, 48, 49 are parallel to each other and to the edge B2 of the vertical panel 21.

The inlets of said holes 46, 47 and 48, 49 are on the visible front edge B of the base 22, whereas the outlets open in correspondence with the inlet of respective channels 46C, 47C and 48C, 49C, whose outlets open in correspondence with the indentations 39, 45.

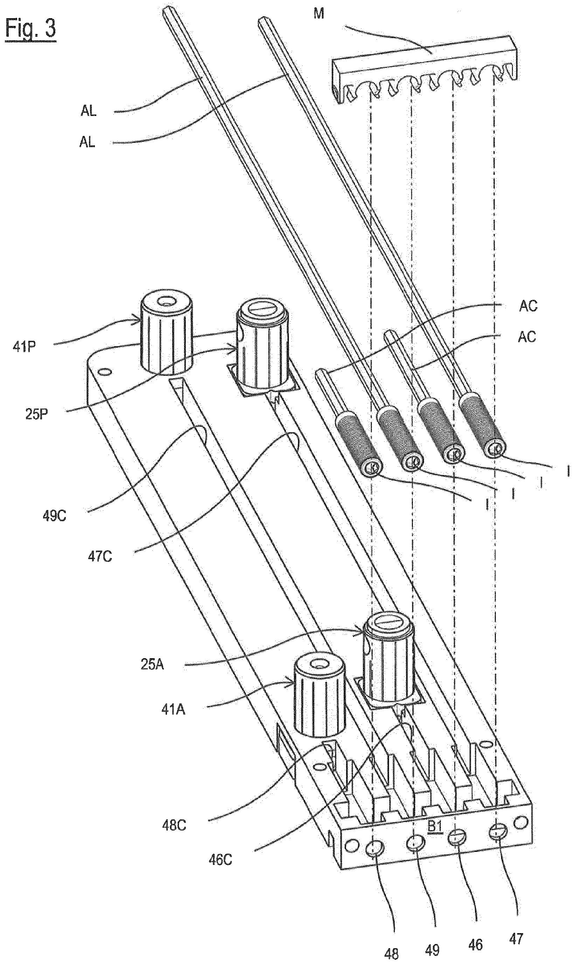

As can be clearly seen from figures 3, 4, 6 and 7, short rods AC and long rods AL are housed in said channels 46C, 47C and 48C, 49C, for the operational connection of the holes 46, 47 and 48, 49 with the indentations 39, 45.

For this purpose, the front ends of said connection rods have indentations I for a maneuvering/actuation tool.

Finally, said connection rods are held in place by means of a clip, with snap engagement, indicated as a whole by M.

According to this embodiment of the invention, the lower side or surface 68 of the module 60, the lower surface 35 of the base 22, and the lower edge B2 of the vertical panel 21 are coplanar with each other (figures 6 and 7).

As can be clearly seen from figures 1, 6 and 7 of the drawings, a lower part of said joining units 25A, 25P and levelling units 41A, 41P is contained within the support-container 61 (within its thickness S1), whereas another upper part protrudes vertically from said support-container 61 and extends inside the respective seats 34, 69 of the base 22. In this way, according to the invention, both the joining and levelling units (their overall height), are contained within the thickness S of the base 22.

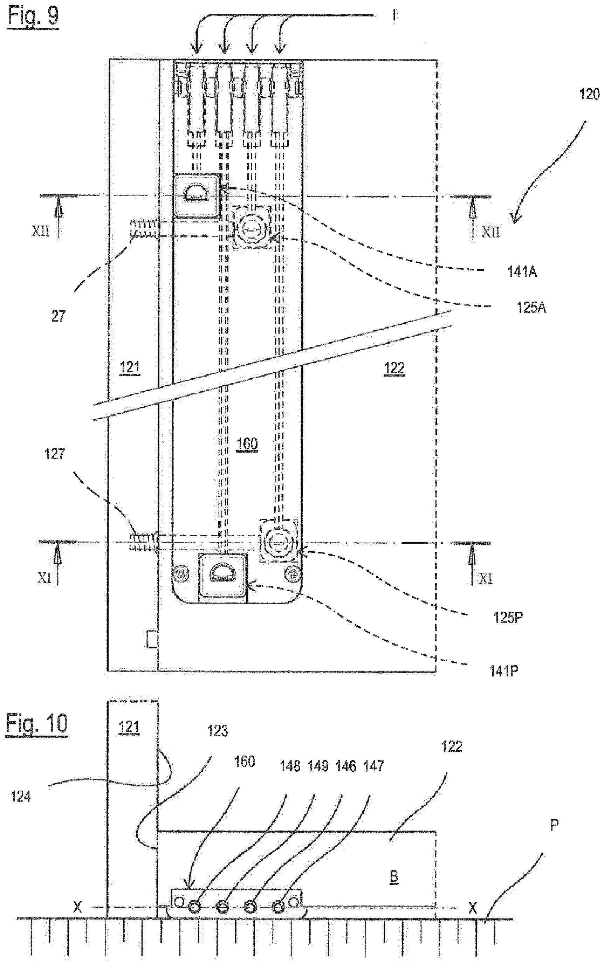

Figures 8-12 illustrate an embodiment not according to the invention wherein components that are the same as or equivalent to those illustrated in figures 1-7 are indicated with the same reference numbers increased by 100.

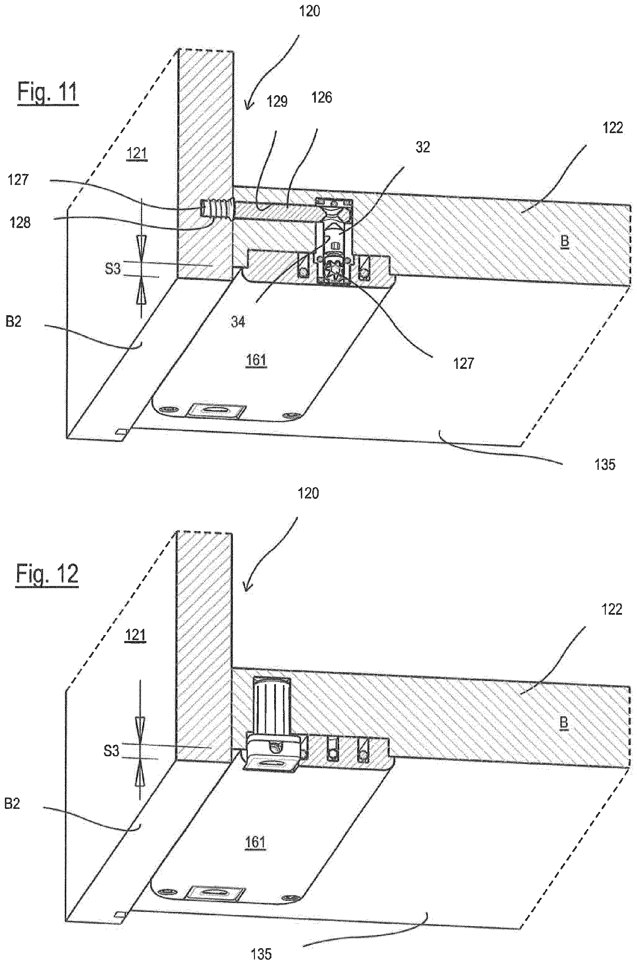

This second embodiment of the invention differs from the first embodiment illustrated in figures 1-7, only in that a small part (extension in height) of the joining units 125A, 125P and levelling units 141A, 141P occupies a space S2 provided between the base 122 and the floor P (figures 11, 12). For this purpose, the lower surface 135 of the base 122 is raised with respect to the lower edge B2 of the vertical panel 121. Consequently, before the levelling operation, the furniture rests on the floor P through the edges B2 of the vertical panels 121.

The support-container 161 of the module 160 thus partially protrudes, for a small height, from its seat 167, as it rests on the lower surface 135 of the base 122 by means of longitudinal flanges 170.

C indicates an aesthetic cover, which hides the holes 48,49,148,149 when not in use.

The objective mentioned in the preamble of the description has thus been achieved.

The protection scope of the present invention is defined by the enclosed claims.

## Claims

1. A furnishing item comprising at least one assembly (20,120) consisting of a vertical panel (21,121) perpendicular to a floor (P) and a horizontal panel or base (22,122) with a visible front edge (B), parallel to said floor (P), the furnishing item further comprising a joining and levelling module, said module also comprising a first pair of joining units (25A,25P,125A,125P), front and rear respectively, for joining said vertical panel (21,121) and a horizontal panel or base (22,122) and a second pair of levelling units (41A,41P,141A,141P), front and rear respectively, for levelling the furnishing item with respect to the floor (P), applied to said vertical and horizontal panels or base (21,22), said two pairs of joining and levelling units (25A,25P;41A,41P,125A,125P,141A,141P) being operable from the front, wherein said joining module further comprises a box-shaped support-container (61,161) on which said two pairs of joining and levelling units are assembled (25A,25P;125A,125P,41A,41P;141A,141P), and wherein said support-container (61,161) is configured for being at least partially housed within a complementary seat or recess (67) obtained in the thickness (S) of said base (22), **characterized in that** said module has dimensions of width, length/depth and height/thickness equal to those of the seat or recess (67).

2. A furnishing item according to claim 1, **characterized in that** said support-container (61,161) has a substantially elongated, flattened, parallelepiped configuration, similar to a "power strip".

3. A furnishing item according to claim 1, **characterized in that** said support-container (61,161) has seats (65A,165A;65P,165P;66A,166A;66P,166P) at the opposite front and rear ends, which respectively house part of said joining units (25A,25P,125A,125P) and levelling units (41A,41P,141A,141P).

4. A furnishing item according to claim 1, **characterized in that**, when housed in the seat (67), said module has its lower surface (68) coplanar with the lower surface (35) of the base (22) .

5. A furnishing item according to one or more of the previous claims, **characterized in that** said seat (67) is open in the front with an opening (A), so that said opening (A) is coplanar with the visible edge (B) of the lower panel or base (22) of the furniture assembly (20).

6. A furnishing item according to any of the previous claims, **characterized in that** said module is positioned with its end or front side (B1) coplanar with the visible edge (B) of the base (22), so that access, by means of the tool (40), to the indentations (39,45), of the respective joining units (25A,25P) and levelling units (41A,41P), front and rear respectively, is obtained through respective pass-through holes (46,47) and (48,49), the holes (46,47) allowing access to the joining units (25A,25P), whereas the holes (48,49) allow access to the levelling units (41A,41P).

7. A furnishing item according to claim 6, **characterized in that** said pass-through holes (46,47 and 48,49) lie on the same plane x-x, which is parallel to the lower outer surface (35) of the base (22) and perpendicular to the vertical panel (21).

8. A furnishing item according to claim 6 or 7, **characterized in that** the inlets of said holes (46,47 and 48,49) are on the visible front edge (B) of the base (22), whereas the outlets open in correspondence with the inlets of respective channels (46C,47C and 48C,49C), whose outlets open in correspondence with the indentations (39,45).

9. A furnishing item according to claim 8, **characterized in that** respective short rods (AC) and long rods (AL) are housed in said channels (46C,47C and 48C,49C) for the operational connection of the holes (46,47 and 48,49) with the indentations (39, 45).

10. A furnishing item according to claim 9, **characterized in that** the front ends of said connection rods have indentations (I) for a manoeuvring/actuation tool.

11. A furnishing item according to claim 10, **characterized in that** said connection rods are kept in place by means of a clip (M), with a snap engagement.

12. A furnishing item according to any of the previous claims, **characterized in that** the lower side or surface (68), the lower surface (35) of the base (22) and the lower edge (B2) of the vertical panel (21) are coplanar with each other.

13. A furnishing item according to any of the previous claims, **characterized in that** a lower part of said joining units (25A,25P) and levelling units (41A,41P), is contained inside the support-container (61) within its thickness (S1), whereas another upper part protrudes vertically from said support-container (61) and extends inside the respective seats (34,69) of the base (22), so that both of the joining and levelling units with their overall height are contained within the thickness (S) of the base (22).

14. A furnishing item according to claim 1, **characterized in that** a small part, considering the extension in height, of the joining units (125A,125P) and levelling units (141A,141P), occupies a space (S2) provided between the base (122) and the floor (P).

15. A furnishing item according to claim 1, **characterized in that** said longitudinal holes (46,47,48,49) are parallel to each other and to the edge B2 of the vertical panel (21).

## Patentansprüche

1. Einrichtungsgegenstand, umfassend mindestens eine Anordnung (20, 120), die aus einer vertikalen Platte (21, 121) senkrecht zu einem Boden (P) und einer horizontalen Platte oder Basis (22, 122) mit einem sichtbaren Vorderrand (B) parallel zu dem Boden (P) besteht, wobei der Einrichtungsgegenstand ferner ein Verbindungs- und Nivellierungsmodul umfasst, wobei das Modul auch ein erstes Paar von Verbindungseinheiten (25A, 25P, 125A, 125P), jeweils vorne und hinten, zum Verbinden der vertikalen Platte (21, 121) und einer horizontalen Platte oder Basis (22, 122) und ein zweites Paar von Nivellierungseinheiten (41A, 41P, 141A, 141P), jeweils vorne und hinten, zum Nivellieren des Einrichtungsgegenstands in Bezug auf den Boden (P) umfasst, die an der vertikalen und horizontalen Platte oder Basis (21, 22) angebracht sind, wobei die zwei Paare von Verbindungs- und Nivellierungseinheiten (25A, 25P; 41A, 41P, 125A, 125P, 141A, 141P) von vorne bedienbar sind, wobei das Verbindungsmodul ferner einen kastenförmigen Stützbehälter (61, 161) umfasst, auf dem die zwei Paare von Verbindungs- und Nivellierungseinheiten (25A, 25P; 125A, 125P, 41A, 41P; 141A, 141P) montiert sind, und wobei der Stützbehälter (61, 161) konfiguriert ist, um mindestens teilweise in einem komplementären Sitz oder einer komplementären Ausnehmung (67) aufgenommen zu werden, die in der Dicke (S) der Basis (22) erhalten wird, **dadurch gekennzeichnet, dass** das Modul Abmessungen von Breite, Länge/Tiefe und Höhe/Dicke aufweist, die denen des Sitzes oder der Ausnehmung (67) gleich sind.

2. Einrichtungsgegenstand nach Anspruch 1, **dadurch gekennzeichnet, dass** der Stützbehälter (61, 161) eine im Wesentlichen längliche, abgeflachte, parallelepipedische Konfiguration aufweist, ähnlich einem "Power Strip".

3. Einrichtungsgegenstand nach Anspruch 1, **dadurch gekennzeichnet, dass** der Stützbehälter (61, 161) Sitze (65A, 165A; 65P, 165P; 66A, 166A; 66P, 166P) an den gegenüberliegenden vorderen und hinteren Enden aufweist, die jeweils einen Teil der Verbindungseinheiten (25A, 25P, 125A, 125P) und Nivellierungseinheiten (41A, 41P, 141A, 141P) aufnehmen.

4. Einrichtungsgegenstand nach Anspruch 1, **dadurch gekennzeichnet, dass**, wenn es in dem Sitz (67) aufgenommen ist, die untere Oberfläche (68) des Moduls koplanar mit der unteren Oberfläche (35) der Basis (22) ist.

5. Einrichtungsgegenstand nach einem der vorhergehenden Ansprüche, **dadurch gekennzeichnet, dass** der Sitz (67) vorne mit einer Öffnung (A) offen ist, so dass die Öffnung (A) koplanar mit dem sichtbaren Rand (B) der unteren Platte oder Basis (22) der Einrichtungsanordnung (20) ist.

6. Einrichtungsgegenstand nach einem der vorhergehenden Ansprüche, **dadurch gekennzeichnet, dass** das Modul mit seinem Ende oder seiner Vorderseite (B1) koplanar mit dem sichtbaren Rand (B) der Basis (22) positioniert ist, so dass der Zugang, mittels des Werkzeugs (40), zu den Vertiefungen (39, 45) der jeweiligen Verbindungseinheiten (25A, 25P) und Nivellierungseinheiten (41A, 41P), jeweils vorne und hinten, durch jeweilige Durchgangslöcher (46, 47) und (48, 49) erhalten wird, wobei die Löcher (46, 47) einen Zugang zu den Verbindungseinheiten (25A, 25P) ermöglichen, während die Löcher (48, 49) einen Zugang zu den Nivellierungseinheiten (41A, 41P) ermöglichen.

7. Einrichtungsgegenstand nach Anspruch 6, **dadurch gekennzeichnet, dass** die Durchgangslöcher (46, 47 und 48, 49) auf der gleichen Ebene x-x liegen, die parallel zu der unteren äußeren Oberfläche (35) der Basis (22) und senkrecht zu der vertikalen Platte (21) ist.

8. Einrichtungsgegenstand nach einem der Ansprüche 6 oder 7, **dadurch gekennzeichnet, dass** die Einlässe der Löcher (46, 47 und 48, 49) an dem sichtbaren vorderen Rand (B) der Basis (22) sind, während die Auslässe sich in Übereinstimmung mit den Einlässen der jeweiligen Kanäle (46C, 47C und 48C, 49C) öffnen, deren Auslässe sich in Übereinstimmung mit den Vertiefungen (39, 45) öffnen.

9. Einrichtungsgegenstand nach Anspruch 8, **dadurch gekennzeichnet, dass** jeweilige kurze Stäbe (AC) und lange Stäbe (AL) in den Kanälen (46C, 47C und 48C, 49C) für die betriebliche Verbindung der Löcher (46, 47 und 48, 49) mit den Vertiefungen (39, 45) aufgenommen sind.

10. Einrichtungsgegenstand nach Anspruch 9, **dadurch gekennzeichnet, dass** die vorderen Enden der Verbindungsstäbe Vertiefungen (I) für ein Manövrier-/Betätigungswerkzeug aufweisen.

11. Einrichtungsgegenstand nach Anspruch 10, **dadurch gekennzeichnet, dass** die Verbindungsstäbe mittels einer Klammer (M) mit einem Schnappeingriff an Ort und Stelle gehalten werden.

12. Einrichtungsgegenstand nach einem der vorhergehenden Ansprüche, **dadurch gekennzeichnet, dass** die untere Seite oder Oberfläche (68), die untere Oberfläche (35) der Basis (22) und der untere Rand (B2) der vertikalen Platte (21) koplanar miteinander sind.

13. Einrichtungsgegenstand nach einem der vorhergehenden Ansprüche, **dadurch gekennzeichnet, dass** ein unterer Teil der Verbindungseinheiten (25A, 25P) und Nivellierungseinheiten (41A, 41P) innerhalb des Stützbehälters (61) innerhalb seiner Dicke (S1) enthalten ist, während ein anderer oberer Teil vertikal von dem Stützbehälter (61) vorsteht und sich innerhalb der jeweiligen Sitze (34, 69) der Basis (22) erstreckt, so dass sowohl die Verbindungs- als auch die Nivellierungseinheiten mit ihrer Gesamthöhe innerhalb der Dicke (S) der Basis (22) enthalten sind.

14. Einrichtungsgegenstand nach Anspruch 1, **dadurch gekennzeichnet, dass** ein kleiner Teil, unter Berücksichtigung der Höhenausdehnung, der Verbindungseinheiten (125A, 125P) und Nivellierungseinheiten (141A, 141P) einen Raum (S2) einnimmt, der zwischen der Basis (122) und dem Boden (P) bereitgestellt ist.

15. Einrichtungsgegenstand nach Anspruch 1, **dadurch gekennzeichnet, dass** die Längslöcher (46, 47, 48, 49) parallel zueinander und zu dem Rand B2 der vertikalen Platte (21) sind.

## Revendications

1. Article d'ameublement comprenant au moins un ensemble (20,120) constitué d'un panneau vertical (21,121) perpendiculaire à un sol (P) et d'un panneau ou socle horizontal (22,122) avec un bord avant visible (B), parallèle audit sol (P), l'article d'ameublement comprenant en outre un système de connexion et de mise à niveau, ledit système comprenant également une première paire d'unités de connexion (25A,25P,125A,125P), respectivement avant et arrière, pour connecter ledit panneau vertical (21,121) et un panneau ou socle horizontal (22,122) et une seconde paire d'unités de mise à niveau (41A,41P,141A,141P), respectivement avant et arrière, pour mettre à niveau l'article d'ameublement par rapport au sol (P), appliquées sur lesdits panneaux ou socle vertical et horizontal (21,22), lesdites deux paires d'unités de connexion et de mise à niveau (25A,25P;41A,41P,125A,125P,141A,141P) pouvant être actionnées depuis l'avant, dans lequel ledit système de connexion comprend en outre un conteneur de support en forme de boîtier (61,161) sur lequel lesdites deux paires d'unités de connexion et de mise à niveau sont assemblées (25A,25P;125A,125P,41A,41P;141A,141P), et dans lequel ledit conteneur de support (61,161) est configuré pour être au moins partiellement logé dans un siège ou un évidement complémentaire (67) obtenu dans l'épaisseur (S) dudit socle (22), **caractérisé en ce que** ledit système a des dimensions de largeur, de longueur/profondeur et de hauteur/épaisseur égales à celles du siège ou évidement (67).

2. Article d'ameublement selon la revendication 1, **caractérisé en ce que** ledit conteneur de support (61,161) a une configuration sensiblement allongée, aplatie, parallélépipédique, similaire à une « prise multiple ».

3. Article d'ameublement selon la revendication 1, **caractérisé en ce que** ledit conteneur de support (61,161) a des sièges (65A,165A;65P,165P;66A,166A;66P,166P) aux extrémités avant et arrière opposées, qui logent respectivement une partie desdites unités de connexion (25A,25P,125A,125P) et unités de mise à niveau (41A,41P,141A,141P).

4. Article d'ameublement selon la revendication 1, **caractérisé en ce que**, lorsqu'il est logé dans le siège (67), ledit système a sa surface inférieure (68) coplanaire avec la surface inférieure (35) du socle (22).

5. Article d'ameublement selon une ou plusieurs des revendications précédentes, **caractérisé en ce que** ledit siège (67) est ouvert à l'avant avec une ouverture (A), de sorte que ladite ouverture (A) soit coplanaire avec le bord visible (B) du panneau ou socle inférieur (22) de l'ensemble de meuble (20).

6. Article d'ameublement selon l'une quelconque des revendications précédentes, **caractérisé en ce que** ledit système est positionné avec son extrémité ou côté avant (B1) de manière coplanaire avec le bord visible (B) du socle (22), de sorte que l'accès, au moyen de l'outil (40), aux indentations (39,45), des unités de connexion (25A,25P) et des unités de mise à niveau (41A,41P) respectives, respectivement avant et arrière, soit obtenu à travers des trous traversants respectifs (46,47) et (48,49), les trous (46,47) permettant l'accès aux unités de connexion (25A,25P), tandis que les trous (48,49) permettent l'accès aux unités de mise à niveau (41A,41P).

7. Article d'ameublement selon la revendication 6, **caractérisé en ce que** lesdits trous traversants (46,47 et 48,49) se trouvent sur le même plan x-x, qui est parallèle à la surface extérieure inférieure (35) du socle (22) et perpendiculaire au panneau vertical (21).

8. Article d'ameublement selon la revendication 6 ou 7, **caractérisé en ce que** les entrées desdits trous (46,47 et 48,49) sont sur le bord avant visible (B) du socle (22), tandis que les sorties s'ouvrent en correspondance avec les entrées des canaux respectifs (46C,47C et 48C,49C), dont les sorties s'ouvrent en correspondance avec les indentations (39,45).

9. Article d'ameublement selon la revendication 8, **caractérisé en ce que** des tiges courtes (AC) et des tiges longues (AL) respectives sont logées dans lesdits canaux (46C,47C et 48C,49C) pour le raccordement fonctionnel des trous (46,47 et 48,49) avec les indentations (39,45).

10. Article d'ameublement selon la revendication 9, **caractérisé en ce que** les extrémités avant desdites tiges de raccordement présentent des indentations (I) pour un outil de manœuvre/actionnement.

11. Article d'ameublement selon la revendication 10, **caractérisé en ce que** lesdites tiges de raccordement sont maintenues en place au moyen d'une attache (M), avec une prise par encliquetage.

12. Article d'ameublement selon l'une quelconque des revendications précédentes, **caractérisé en ce que** le côté ou la surface inférieure (68), la surface inférieure (35) du socle (22) et le bord inférieur (B2) du panneau vertical (21) sont coplanaires les uns avec les autres.

13. Article d'ameublement selon l'une quelconque des revendications précédentes, **caractérisé en ce qu'**une partie inférieure desdites unités de connexion (25A,25P) et unités de mise à niveau (41A,41P) est contenue à l'intérieur du conteneur de support (61) à l'intérieur de son épaisseur (S1), tandis qu'une autre partie supérieure fait saillie verticalement à partir dudit conteneur de support (61) et s'étend à l'intérieur des sièges respectifs (34,69) du socle (22), de sorte que les deux unités de connexion et de mise à niveau avec leur hauteur totale soient contenues à l'intérieur de l'épaisseur (S) du socle (22).

14. Article d'ameublement selon la revendication 1, **caractérisé en ce qu'**une petite partie, compte tenu de l'extension en hauteur, des unités de connexion (125A,125P) et des unités de mise à niveau (141A,141P), occupe un espace (S2) prévu entre le socle (122) et le sol (P).

15. Article d'ameublement selon la revendication 1, **caractérisé en ce que** lesdits trous longitudinaux (46,47,48,49) sont parallèles les uns aux autres et au bord B2 du panneau vertical (21).
